# EUROPEAN PATENT APPLICATION

(11) **EP 4 848 407 A1**
(43) Date of publication of application: **02.12.2026**
(21) Application number: 24931298.4
(22) Date of filing: 21.08.2024
(51) Int. Cl.: H01M 10/44, H01M 10/52

(54) **FORMATION NEGATIVE PRESSURE SYSTEM AND CONTROL METHOD THEREFOR**

(30) Priority: 29.03.2024 CN 202410382483
(71) Applicant: Contemporary Amperex Technology Co., Limited, Ningde, Fujian 352100 (CN); CONTEMPORARY AMPEREX RUNZHI SOFTWARE TECHNOLOGY LIMITED, Ningde, Fujian 352100 (CN)
(72) Inventor: ZHAO, Jiayi, Ningde, Fujian 352100 (CN); LIN, Wu, Ningde, Fujian 352100 (CN); WANG, Zhihui, Ningde, Fujian 352100 (CN)
(74) Representative: Aera A/S
(86) International application number: PCT/CN2024/113748
(87) International publication number: WO 2025/200257

(57) **Abstract**

Embodiments of the present disclosure relate to the technical field of battery production, and disclose a formation negative pressure system (100) and a control method therefor. The formation negative pressure system (100) includes a first positive pressure gas source (10), a negative pressure source (20), and a negative pressure module (30). The first positive pressure gas source is configured to provide dry gas. The negative pressure module (30) includes a gas nozzle (31). One end of the gas nozzle (31) is selectively in communication with the first positive pressure gas source (10) or the negative pressure source (20), and the other end of the gas nozzle is configured to be matched with a liquid injection hole of a battery cell. The negative pressure source (20) is configured to be capable of vacuumizing the battery cell by means of the gas nozzle (31). According to the formation negative pressure system (100) of the embodiments of the present disclosure, a small-range dry gas protection layer can be conveniently formed around the liquid injection hole of the battery cell by means of the first positive pressure gas source (10), and by means of the dry gas protection layer, even if a formation workshop is in a high-humidity environment, water vapor cannot flow into the battery cell, that is, it is not needed to dehumidify the entire formation workshop by means of a dehumidification system, thereby being conducive to reducing the production energy consumption of the battery cell.

## Description

### CROSS-REFERENCE TO RELATED APPLICATIONS

The present disclosure is based on, and claims priority to, Chinese Patent Application No. 202410382483.X, filed on March 29, 2024 and entitled "FORMATION NEGATIVE PRESSURE SYSTEM AND CONTROL METHOD THEREFOR", the entire content of which is hereby incorporated herein by reference.

### TECHNICAL FIELD

The present disclosure relates to the technical field of battery production, and in particular, to a formation negative pressure system and a control method therefor.

### BACKGROUND

Batteries are increasingly widely used in daily life and production. For example, new energy vehicles equipped with batteries have been widely used, and batteries can provide all or part of the power for new energy vehicles. In addition, batteries are increasingly applied in the fields of energy storage and the like.

Currently, during battery manufacturing, formation treatment is required to improve battery performance. In the related art, the energy consumption during battery formation is relatively high.

### SUMMARY

In view of this, an objective of embodiments of the present disclosure is to provide a formation negative pressure system and a control method therefor, which aims to reduce energy consumption during formation of a battery cell.

To achieve the above objective, in a first aspect, the embodiments of the present disclosure provide a formation negative pressure system, including:
a first positive pressure gas source, configured to provide dry gas;
a negative pressure source; and
a negative pressure module, including a gas nozzle, where one end of the gas nozzle is selectively in communication with the first positive pressure gas source or the negative pressure source, the other end of the gas nozzle is configured to be matched with a liquid injection hole of a battery cell, and the negative pressure source is configured to be capable of vacuumizing the battery cell via the gas nozzle.

In the above technical solution, the first positive pressure gas source can facilitate formation of a small-range dry gas protection layer around the liquid injection hole of the battery cell. In a state where the dry gas protection layer is formed around the liquid injection hole, the switch valve of the battery cell is opened and the gas nozzle is in sealing fit with the liquid injection hole. By means of the dry gas protection layer, even if the formation workshop is in a high-humidity environment, water vapor cannot flow into the battery cell, that is, it is not needed to dehumidify the entire formation workshop by means of the dehumidification system, thereby being conducive to reducing the production energy consumption of the battery cell.

In an embodiment, the formation negative pressure system further includes a pipeline assembly, where the pipeline assembly includes a first gas passage, a second gas passage, and a valve unit, the first positive pressure gas source is in communication with the gas nozzle via the first gas passage, the negative pressure source is in communication with the gas nozzle via the second gas passage, and the valve unit is disposed on the first gas passage and the second gas passage and is capable of respectively opening or closing the first gas passage and the second gas passage.

In the above technical solution, the first gas passage and the second gas passage are respectively opened or closed by the valve unit, which is beneficial to improving the automation level of the formation negative pressure system, reducing the manual operation steps of the battery cell in the formation process, and improving the formation efficiency of the battery cell.

In an embodiment, the valve unit includes a first pneumatic control valve disposed on the first gas passage, and the pipeline assembly further includes a first control assembly, where the first control assembly is configured to control the first pneumatic control valve to switch to an open state or a closed state.

In the above technical solution, the first gas passage is controlled to be opened or closed by the first pneumatic control valve, and the first pneumatic control valve is non-energized, thereby avoiding the risk of ignition or even explosion of flammable and explosive gases such as hydrogen remaining in the first gas passage.

In an embodiment, the first control assembly includes a first solenoid valve, a third gas passage, and a second positive pressure gas source, where the second positive pressure gas source is in communication with the first pneumatic control valve via the third gas passage, and the first solenoid valve is disposed on the third gas passage.

In the above technical solution, a gas delivery path from the second positive pressure gas source to the first pneumatic control valve is connected or disconnected by the first solenoid valve, which facilitates control of the first pneumatic control valve and also facilitates improvement of the automation level of the formation negative pressure system.

In an embodiment, the valve unit includes a second pneumatic control valve disposed on the second gas passage, and the pipeline assembly further includes a second control assembly, where the second control assembly is configured to control the second pneumatic control valve to switch to an open state or a closed state.

In the above technical solution, the second gas passage is controlled to be opened or closed by the second pneumatic control valve, and the second pneumatic control valve is non-energized, thereby avoiding the risk of ignition or even explosion of flammable gas such as hydrogen remaining in the second gas passage.

In an embodiment, the second control assembly includes a second solenoid valve, a fourth gas passage, and a third positive pressure gas source, where the third positive pressure gas source is in communication with the second pneumatic control valve via the fourth gas passage, and the second solenoid valve is disposed on the fourth gas passage.

In the above technical solution, a gas delivery path from the third positive pressure gas source to the second pneumatic control valve is connected or disconnected by the second solenoid valve, which facilitates control of the second pneumatic control valve and also facilitates improvement of the automation level of the formation negative pressure system.

In an embodiment, the pipeline assembly further includes a gas-liquid separator, where the gas-liquid separator is disposed on the second gas passage.

In the above technical solution, by disposing the gas-liquid separator to separate exhaust gas from waste electrolyte, on the one hand, the risk of the electrolyte entering other components of the formation negative pressure system is reduced, thereby helping to improve the overall service life of the formation negative pressure system; and on the other hand, the risk of the waste electrolyte flowing back into the battery cell can be reduced, thereby helping to improve the reliability of the battery cell.

In an embodiment, the pipeline assembly further includes a liquid storage member and a drain valve, where the liquid storage member is in communication with the gas-liquid separator and is configured to collect liquid separated by the gas-liquid separator, and the drain valve is disposed on the liquid storage member and configured to be capable of connecting or switching a liquid discharge path from the liquid storage member to the outside.

In the above technical solution, the arrangement of the liquid storage member and the drain valve facilitates collection of the electrolyte separated by the gas-liquid separator, thereby facilitating unified discharge and treatment of the electrolyte without real-time treatment thereof, which helps to simplify the treatment process.

In an embodiment, the negative pressure module further includes a housing having a hollow cavity, and there are a plurality of gas nozzles, where each of the gas nozzles is disposed on the housing and is in communication with the hollow cavity, and the hollow cavity is selectively in communication with the first positive pressure gas source or the negative pressure source.

In the above technical solution, by forming the hollow cavity, on the one hand, one negative pressure module can be provided with a plurality of gas nozzles, such that the negative pressure module can simultaneously perform formation treatment on a plurality of battery cells; and on the other hand, when the battery cell is subjected to the formation treatment, the extracted electrolyte can enter the hollow cavity under the action of the negative pressure source, and each gas nozzle does not need to be provided with a negative pressure cup separately, thereby reducing the number of components to be cleaned and helping to lower manual cleaning costs.

In an embodiment, the formation negative pressure system further includes a frame body, where the negative pressure module is disposed on the frame body, and a mounting position of the gas nozzle on the frame body is adjustable.

In the above technical solution, by configuring the mounting position of the gas nozzle on the frame body to be adjustable, the gas nozzle can be moved to a plurality of mounting positions, such that the gas nozzle can be conveniently in sealing fit with liquid injection holes of battery cells of various types and sizes, thereby helping to improve the versatility of the formation negative pressure system.

In an embodiment, the frame body is provided with a plurality of mounting positions arranged in a first direction, and the gas nozzle is capable of being mounted on any one of the mounting positions.

In the above technical solution, by providing the plurality of mounting positions arranged in the first direction, the mounting of the gas nozzle on the frame body is facilitated, and the mounting position of the gas nozzle on the frame body is made adjustable.

In an embodiment, the negative pressure module further includes a first limiting member and a second limiting member spaced apart on the gas nozzle in a second direction, where at least part of the frame body is clamped between the first limiting member and the second limiting member, the first limiting member is provided with an engaging portion, and the first limiting member is movable in the second direction, such that the engaging portion is capable of being engaged with or disengaged from the mounting position, where the second direction intersects with the first direction.

In the above technical solution, only by controlling the first limiting member to move in the second direction, the gas nozzle can be conveniently moved in the first direction and moved to another mounting position while the gas nozzle can be engaged with or disengaged from one mounting position, thereby improving the convenience of mounting the gas nozzle and switching the mounting position.

In an embodiment, one of the mounting position and the engaging portion is a groove, and the other of the mounting position and the engaging portion is a protrusion, where the protrusion extends in the second direction.

In the above technical solution, the engagement between the protrusion and the groove is relatively simple, which facilitates engagement or disengagement of the engaging portion with or from the mounting position.

In an embodiment, the frame body is provided with a sliding slot extending in the first direction, and the gas nozzle is movably disposed through the sliding slot in the first direction.

In the above technical solution, when the gas nozzle moves in the first direction to switch among the plurality of mounting positions, the sliding slot can provide guidance for the movement of the gas nozzle, which facilitates the movement of the gas nozzle to the mounting position where it is to be mounted.

In an embodiment, the negative pressure module further includes a first elastic return member; under an external force, the first limiting member is movable in the second direction to disengage the engaging portion from the mounting position, and the first elastic return member undergoes elastic deformation; and the first elastic return member recovers from the elastic deformation to engage the engaging portion with the mounting position.

In the above technical solution, by means of the first elastic return member, on the one hand, the reliability of engagement between the engaging portion and the mounting position can be enhanced; and on the other hand, after the first elastic return member undergoes elastic deformation, a certain elastic force can be provided. Under the elastic force, the engaging portion can be conveniently engaged with the mounting position, thereby facilitating operation by an operator.

In an embodiment, the negative pressure module further includes a second elastic return member; under the external force, the second limiting member is movable in the second direction and can be separated from the frame body, and the second elastic return member undergoes elastic deformation; and the second elastic return member recovers from the elastic deformation, such that the second limiting member abuts against the frame body.

In the above technical solution, the second limiting member abuts against the frame body via the second elastic return member. On the one hand, the second elastic return member can undergo elastic deformation, thereby facilitating release of the limitation between the second limiting member and the frame body in the second direction, and further enabling the gas nozzle to be moved to any mounting position. On the other hand, in a return state, the second elastic return member can press the second limiting member against the frame body, thereby improving the mounting stability of the gas nozzle on the frame body.

In a second aspect, the embodiments of the present disclosure provide a control method for a formation negative pressure system, the formation negative pressure system including a control module, a first positive pressure gas source, a negative pressure source, and a negative pressure module, the negative pressure module including a gas nozzle, and the control method including:
in response to a battery cell entering a formation process, controlling, by the control module, the gas nozzle to be in communication with the first positive pressure gas source, and controlling the first positive pressure gas source to deliver dry gas to the gas nozzle for a first preset time;
controlling, by the control module, the first positive pressure gas source and the gas nozzle to switch to a disconnected state;
controlling, by the control module, the gas nozzle to be in sealing fit with a liquid injection hole of the battery cell; and
controlling, by the control module, the gas nozzle to be in communication with the negative pressure source, vacuumizing the battery cell by the negative pressure source, and starting formation.

In the above technical solution, a dry gas protection layer can be conveniently formed around the liquid injection hole of the battery cell by delivering the dry gas to the battery cell. In a state where the dry gas protection layer is formed, the switch valve of the battery cell is opened, and the gas nozzle is quickly in sealing fit with the liquid injection hole. By means of the dry gas protection layer, even if the formation workshop is in a high-humidity environment, water vapor cannot flow into the battery cell, that is, it is not needed to dehumidify the entire formation workshop by means of the dehumidification system, thereby being conducive to reducing the production energy consumption of the battery cell.

In an embodiment, the first preset time is in a range of 10 s to 30 s.

In the above technical solution, by controlling the first preset time within a range of 10 s to 30 s, on the one hand, the first preset time is at least 10 s, that is, the first positive pressure gas source can deliver the dry gas for at least 10 s, thereby facilitating formation of the small-range dry gas protection layer at the liquid injection hole of the battery cell; and on the other hand, the first preset time is at most 30 s, such that on the premise of ensuring the formation of the dry gas protection layer, excessive time is not occupied, thereby reasonably controlling the time required by the entire formation process of the battery cell and helping to improve the production efficiency of the battery cell.

In an embodiment, the control method further includes: [0050] determining that the formation process of the battery cell is completed, then controlling, by the control module, the gas nozzle to remain in communication with the negative pressure source, and controlling the gas nozzle to be separated from the liquid injection hole of the battery cell.

In the above technical solution, after the gas nozzle is separated from the liquid injection hole of the battery cell, the dry gas is blown out to the gas nozzle via the first positive pressure gas source, which facilitates blowing out the residual electrolyte in the gas nozzle and helps to reduce contamination of the gas nozzle.

In an embodiment, after the step of determining that the formation process of the battery cell is completed, then controlling, by the control module, the gas nozzle to remain in communication with the negative pressure source, and controlling the gas nozzle to be separated from the liquid injection hole of the battery cell, the control method further includes:
controlling, by the control module, the gas nozzle to be in communication with the first positive pressure gas source, and controlling the first positive pressure gas source to deliver the dry gas to the gas nozzle for a second preset time.

In the above technical solution, by maintaining the gas nozzle in communication with the negative pressure source, the gas such as hydrogen generated by the battery cell in the entire formation process can be extracted by the negative pressure source as much as possible, thereby reducing the possibility that this part of gas remains in the battery cell as much as possible, and further reducing the risk of adversely affecting the performance of the battery cell.

In an embodiment, the second preset time is in a range of 5 s to 10 s.

In the above technical solution, by controlling the second preset time within a range of 5 s to 0 s, on the one hand, the second preset time is at least 5 s, meaning that after the formation process of the previous batch of battery cells is completed, the first positive pressure gas source delivers the dry gas to the gas nozzle for at least 5 s, thereby helping to blow out the electrolyte in the gas nozzle; and on the other hand, the second preset time is at most 10 s, such that on the premise of ensuring that the gas nozzle can blow out the electrolyte, excessive blowing time is not occupied, thereby allowing the formation process of the next batch of battery cells to proceed quickly and helping to improve the production efficiency of the battery cell.

### BRIEF DESCRIPTION OF THE DRAWINGS

FIG. 1 is a schematic structural diagram of a formation negative pressure system according to a first embodiment of the present disclosure;
FIG. 2 is a schematic structural diagram of a formation negative pressure system according to a second embodiment of the present disclosure;
FIG. 3 is a schematic structural diagram of a formation negative pressure system according to a third embodiment of the present disclosure;
FIG. 4 is a schematic diagram of a mounting structure of a negative pressure module and a frame body according to an embodiment of the present disclosure;
FIG. 5 is a schematic enlarged view at A in FIG. 4; and
FIG. 6 is a flowchart of a control method for a formation negative pressure system according to an embodiment of the present disclosure.

### Description of reference numerals

100: formation negative pressure system; 10: first positive pressure gas source; 20: negative pressure source; 30: negative pressure module; 31: gas nozzle; 32: housing; 32a: hollow cavity; 33: first limiting member; 33a: engaging portion; 34: second limiting member; 35: first elastic return member; 36: second elastic return member; 40: pipeline assembly; 41: first gas passage; 42: second gas passage; 43: valve unit; 431: first pneumatic control valve; 432: second pneumatic control valve; 44: first control assembly; 441: first solenoid valve; 442: third gas passage; 443: second positive pressure gas source; 45: second control assembly; 451: second solenoid valve; 452: fourth gas passage; 453: third positive pressure gas source; 46: gas-liquid separator; 47: liquid storage member; 48: drain valve; 49: liquid level sensor; 50: frame body; 50a: mounting position; 50b: sliding slot; and 200: battery cell.

### DETAILED DESCRIPTION OF PREFERRED EMBODIMENTS

To make the objectives, technical solutions and advantages of the embodiments of the present disclosure clearer, the technical solutions in the embodiments of the present disclosure will be described clearly below with reference to the accompanying drawings in the embodiments of the present disclosure. The following embodiments are only used to more clearly illustrate the technical solutions of the present disclosure, and thus are used as examples only, and are not intended to limit the protection range of the present disclosure. All other embodiments obtained by those skilled in the art based on the embodiments of the present disclosure without making creative efforts shall fall within the protection scope of the present disclosure.

In the description of the embodiments of the present disclosure, the technical terms such as "first", "second", and "third" are used only for distinguishing between different objects, but cannot be construed to indicate or imply relative importance or implicitly indicate the number, specific order, or primary/secondary relationship of indicated technical features. In the description of the embodiments of the present disclosure, "a plurality of" means two or more unless specifically defined otherwise.

Reference to "an embodiment" herein means that a particular feature, structure, or characteristic described with reference to the embodiment can be included in at least one embodiment of the present disclosure. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present disclosure, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the description of the embodiments of the present disclosure, unless otherwise specified and defined explicitly, the terms such as "mount", "connected", "connect", and "fix" should be understood in a broad sense. For example, they may refer to a fixed connection, a detachable connection, or an integral connection, may refer to a mechanical connection or electrical connection, and may refer to a direct connection, an indirect connection via an intermediate medium, or an internal communication between two elements or interaction between two elements. Those of ordinary skill in the art may understand specific meanings of the above terms in the embodiments of the present disclosure based on specific circumstances.

In the description of the embodiments of the present disclosure, unless otherwise specified and defined, the technical term "contact" should be understood in a broad sense, which may be direct contact, contact via an intermediate medium layer, contact between two in contact with each other substantially without an interaction force, or contact between two in contact with each other with an interaction force.

The following describes the present disclosure in detail.

The formation negative pressure system and the control method for the formation negative pressure system provided by the embodiments of the present disclosure are both used for producing the battery according to the present disclosure. To make the formation negative pressure system and the control method for the formation negative pressure system according to the present disclosure clearer, the battery according to the present disclosure is introduced first before describing the formation negative pressure system and the control method for the formation negative pressure system according to the present disclosure.

The battery provided by the embodiments of the present disclosure may be used alone. A plurality of batteries may be grouped and used as a battery pack. The battery and the battery pack may be used in, but not limited to, an electric device. The electric device includes, but is not limited to, a mobile phone, a tablet computer, a notebook computer, an electric toy, an electric tool, a vehicle, a ship, a spacecraft, and the like. The spacecraft may include aircraft, rockets, space shuttles, spaceships, and the like.

Taking the electric device of an embodiment of the present disclosure as a vehicle for example, the vehicle may be a fuel vehicle, a gas vehicle, or a new energy vehicle, and the new energy vehicle may be a battery electric vehicle, a hybrid electric vehicle, or a range-extended electric vehicle. Inside the vehicle, a battery is disposed, which may be disposed at the bottom, front, or rear of the vehicle. The battery may be configured to power the vehicle, for example, the battery may serve as an operating power source of the vehicle. In some embodiments, the battery may be used not only as an operating power source for the vehicle, but also as a driving power source for the vehicle, instead of or partially instead of fuel or natural gas to provide driving power for the vehicle.

The battery may be a lithium-ion battery, a sodium-ion battery, a lithium metal battery, a lithium-sulfur battery, or the like, which is not limited in the embodiments of the present disclosure.

The battery includes at least one battery cell. The battery cell is an energy storage component of the battery. The battery further includes a battery monitoring and management device, configured to monitor the state of charge and the like of the battery cell.

In the battery, a plurality of battery cells may be provided, and the plurality of battery cells may be subjected to series connection, parallel connection, or series-parallel connection. The series-parallel connection means that the plurality of battery cells are subjected to both series connection and parallel connection. The plurality of battery cells may be directly connected in series, in parallel, or in series-parallel. Certainly, the battery may also be formed in a manner that a plurality of battery cells are subjected to series connection, parallel connection, or series-parallel connection to form battery modules, and the plurality of battery modules are then subjected to series connection, parallel connection, or series-parallel connection to form an integrated unit.

In the embodiments of the present disclosure, the battery cell may be a secondary battery cell, and the secondary battery cell refers to a battery cell that may be continuously used by activating an active material by charging the battery cell after discharging thereof.

The battery cell may be a cylindrical battery cell, a prismatic battery cell, or a battery cell of another shape. The prismatic battery cell includes a square-shell battery cell or a polygonal prismatic battery cell, such as a hexagonal prismatic battery cell, which is not particularly limited in the present disclosure.

The internal cavity of the battery cell is configured to accommodate the electrode assembly and the electrolyte. By way of example, the battery cell includes a housing, an electrode assembly, and electrolyte, where the electrode assembly and the electrolyte are placed in the housing. The housing is configured to enclose components such as the electrode assembly and the electrolyte. The housing is provided with a liquid injection hole, through which the electrolyte is injected into the internal cavity.

The battery cell provided by the embodiments of the present disclosure further includes a switch valve, where the switch valve is disposed at the liquid injection hole, such that the internal cavity of the battery cell can be opened and closed. The switch valve can be opened and closed under an external force. The switch valve can be opened by pressing with the external force and can be closed by its own elasticity after the external force is removed.

During production of the battery cell, formation treatment needs to be performed on the battery cell. The formation treatment refers to a process of charging the battery cell for the first time to activate the battery. During formation treatment of the battery cell, open formation is generally adopted, i.e., the switch valve is in an open state. Since the switch valve is in the open state for a long time, there is a possibility that water vapor enters the internal cavity through the liquid injection hole.

In the related art, a dehumidification system is generally used to dehumidify the entire formation workshop, such that the environment in the entire formation workshop is in a low-humidity state, thereby reducing the possibility that water vapor enters the internal cavity through the liquid injection hole during formation treatment of the battery cell. However, the overall space of the formation workshop is relatively large, and the dehumidification system needs to operate at a high intensity, resulting in relatively high energy consumption during production of the battery cell.

In view of this, a first aspect of the embodiments of the present disclosure provides a formation negative pressure system. The formation negative pressure system includes a first positive pressure gas source, a negative pressure source, and a negative pressure module. The first positive pressure gas source is configured to provide dry gas. The negative pressure module includes a gas nozzle. One end of the gas nozzle is selectively in communication with the first positive pressure gas source or the negative pressure source, and the other end of the gas nozzle is configured to be matched with a liquid injection hole of a battery cell. The negative pressure source is configured to be capable of vacuumizing the battery cell by means of the gas nozzle.

In the above technical solution, before formation treatment of the battery cell, the gas nozzle is in communication with the first positive pressure gas source, the first positive pressure gas source delivers the dry gas to the battery cell, the switch valve of the battery cell is opened after the dry gas protection layer is formed around the liquid injection hole, and the gas nozzle is in sealing fit with the liquid injection hole; and during formation treatment, the gas nozzle is in communication with the negative pressure source. That is, the dehumidification system is not required to dehumidify the entire formation workshop, thereby helping to reduce the production energy consumption of the battery cell.

The following further describes some embodiments of the present disclosure in detail with reference to the accompanying drawings.

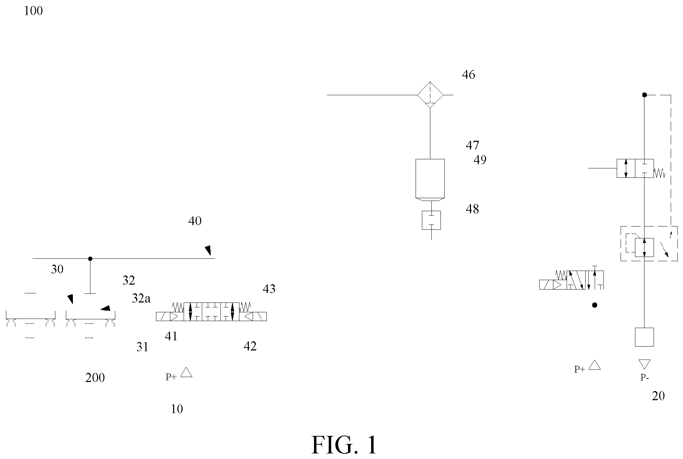

Referring to FIG. 1 to FIG. 3 together, the formation negative pressure system 100 includes a first positive pressure gas source 10, a negative pressure source 20, and a negative pressure module 30. The first positive pressure gas source 10 is configured to provide dry gas. The negative pressure module 30 includes a gas nozzle 31. One end of the gas nozzle 31 is selectively in communication with the first positive pressure gas source 10 or the negative pressure source 20, and the other end of the gas nozzle is configured to be matched with a liquid injection hole of a battery cell 200. The negative pressure source 20 is configured to be capable of vacuumizing the battery cell 200 by means of the gas nozzle 31.

The first positive pressure gas source 10 is a component capable of providing positive pressure dry gas. In some embodiments, the first positive pressure gas source 10 may be an air pump, and the air pump pumps out the dry gas.

The negative pressure source 20 is a component capable of providing negative pressure. In some embodiments, the negative pressure source 20 may be a negative pressure pump.

The expression that one end of the gas nozzle 31 is selectively in communication with the first positive pressure gas source 10 or the negative pressure source 20 means that the gas nozzle 31 may be in communication with the first positive pressure gas source 10 and not in communication with the negative pressure source 20. The gas nozzle may also be in communication with the negative pressure source 20 and not in communication with the first positive pressure gas source 10. Certainly, the gas nozzle 31 may also not be in communication with the first positive pressure gas source 10 and the negative pressure source 20.

When the gas nozzle 31 is in communication with the first positive pressure gas source 10, the first positive pressure gas source 10 may eject dry air through the gas nozzle 31.

When the gas nozzle 31 is in communication with the negative pressure source 20, the negative pressure source 20 can vacuumize other components through the gas nozzle 31. For example, after the gas nozzle 31 is in sealing fit with the liquid injection hole of the battery cell 200, the interior of the battery cell 200 can be vacuumized.

It should be noted that, during formation treatment of the battery cell 200, gas will be generated inside the battery cell 200. The gas remaining inside the battery cell 200 is likely to cause the battery cell 200 to expand and deform, thereby adversely affecting the performance of the battery cell 200. Therefore, when formation treatment is performed on the battery cell 200, the gas inside the battery cell 200 needs to be extracted.

According to the formation negative pressure system of the embodiments of the present disclosure, before formation treatment of the battery cell 200, the gas nozzle 31 is first in communication with the first positive pressure gas source 10, and the first positive pressure gas source 10 delivers the dry gas to the battery cell 200 through the gas nozzle 31, such that a small-range dry gas protection layer can be formed around the liquid injection hole. In a state where the dry gas protection layer is formed, the switch valve is opened and the gas nozzle 31 is quickly in sealing fit with the liquid injection hole. The interior of the battery cell 200 can be vacuumized after the gas nozzle 31 is in communication with the negative pressure source 20. Then, the battery cell 200 enters the formation treatment process.

The gas nozzle 31 is in sealing fit with the liquid injection hole for vacuumization, which effectively reduces the risk of electrolyte overflow.

In the above technical solution, the first positive pressure gas source 10 can facilitate formation of a small-range dry gas protection layer around the liquid injection hole of the battery cell 200. In a state where the dry gas protection layer is formed around the liquid injection hole, the switch valve of the battery cell 200 is opened and the gas nozzle 31 is in sealing fit with the liquid injection hole. By means of the dry gas protection layer, even if the formation workshop is in a high-humidity environment, water vapor cannot flow into the battery cell 200, that is, it is not needed to dehumidify the entire formation workshop by means of the dehumidification system, thereby being conducive to reducing the production energy consumption of the battery cell 200.

It should be noted that in a state where the gas nozzle 31 is in sealing contact with the liquid injection hole, the first positive pressure gas source 10 does not deliver the dry gas to the interior of the battery cell 200. In some embodiments, after the first positive pressure gas source 10 delivers the dry gas for a certain period of time and the dry gas protection layer is formed around the liquid injection hole, a communication path between the first positive pressure gas source 10 and the gas nozzle 31 can be disconnected or the first positive pressure gas source 10 can be switched off, and then the gas nozzle 31 can be in sealing fit with the liquid injection hole.

Referring to FIG. 1, in an embodiment, the formation negative pressure system 100 further includes a pipeline assembly 40. The pipeline assembly 40 includes a first gas passage 41, a second gas passage 42, and a valve unit 43. The first positive pressure gas source 10 is in communication with the gas nozzle 31 via the first gas passage 41. The negative pressure source 20 is in communication with the gas nozzle 31 via the second gas passage 42. The valve unit 43 is disposed on the first gas passage 41 and the second gas passage 42, and can respectively open or close the first gas passage 41 and the second gas passage 42.

The type of the valve unit 43 is not limited. For example, the valve unit may be a two-position five-way solenoid valve.

The valve unit 43 is capable of opening and closing the first gas passage 41. Furthermore, the valve unit 43 is also capable of opening or closing the second gas passage 42.

In some embodiments, the first gas passage 41 and the second gas passage 42 may be completely independent, that is, both are separately connected to the negative pressure module 30.

In some other embodiments, as shown in FIG. 1, the first gas passage 41 and the second gas passage 42 have an overlapping portion, which helps to reduce the material consumption of the pipeline assembly 40. It can be understood that in this embodiment, the valve unit 43 is respectively disposed at positions where the first gas passage 41 and the second gas passage 42 do not overlap.

The first gas passage 41 and the second gas passage 42 are respectively opened or closed by the valve unit 43, which is beneficial to improving the automation level of the formation negative pressure system 100, reducing the manual operation steps of the battery cell 200 in the formation process, and improving the formation efficiency of the battery cell 200.

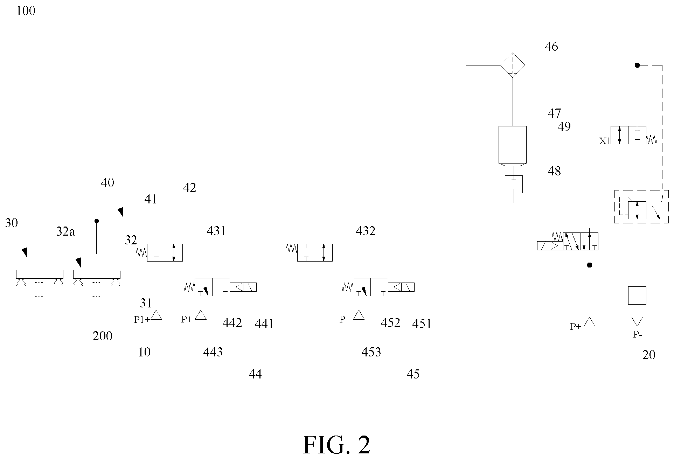

Referring to FIG. 1 and FIG. 2, in an embodiment, the valve unit 43 includes a first pneumatic control valve 431 disposed on the first gas passage 41. The pipeline assembly 40 further includes a first control assembly 44. The first control assembly 44 is configured to control the first pneumatic control valve 431 to switch to an open state or a closed state.

The first pneumatic control valve 431 is a valve controlled by gas. For example, when gas is delivered to the first pneumatic control valve 431, the first pneumatic control valve 431 is switched to the open state; and when gas is stopped from being delivered to the first pneumatic control valve 431, the first pneumatic control valve 431 can be automatically switched to the closed state.

By way of example, the first pneumatic control valve 431 includes a valve core, an elastic member, and a valve seat. The valve core and the valve seat are both provided with flow passages. When gas is delivered to the first pneumatic control valve 431, the gas pushes the valve core to move and causes the flow passage of the valve core and the flow passage of the valve seat to be connected, such that the first pneumatic control valve 431 is switched to the open state. Furthermore, in this case, the elastic member undergoes elastic deformation. After the delivery of gas is stopped, the elastic member pushes the valve core to return, such that the flow passage of the valve core and the flow passage of the valve seat are not connected, and thus, the first pneumatic control valve 431 automatically returns to the closed state.

The first control assembly 44 is a component that controls the first pneumatic control valve 431 to switch to the open state or the closed state.

In this embodiment, the first gas passage 41 and the second gas passage 42 have an overlapping portion.

It can be understood that, when the battery cell 200 is subjected to formation treatment, flammable and explosive gases such as hydrogen can be generated inside through chemical reactions, and during the process of vacuumizing the interior of the battery cell 200 by the negative pressure source 20, such hydrogen may enter the first gas passage 41 through the communication point between the first gas passage 41 and the second gas passage 42. If the solenoid valve is used to control the first gas passage 41 to be opened or closed, the flammable and explosive gases such as hydrogen have the risk of being ignited or even exploding.

The first gas passage 41 is controlled to be opened or closed by the first pneumatic control valve 431, and the first pneumatic control valve 431 is non-energized, thereby avoiding the risk of ignition or even explosion of flammable and explosive gases such as hydrogen remaining in the first gas passage 41.

The specific structure of the first control assembly 44 is not limited. By way of example, referring to FIG. 1 and FIG. 2, in an embodiment, the first control assembly 44 includes a first solenoid valve 441, a third gas passage 442, and a second positive pressure gas source 443. The second positive pressure gas source 443 is in communication with the first pneumatic control valve 431 via the third gas passage 442. The first solenoid valve 441 is disposed on the third gas passage 442.

The type of the first solenoid valve 441 is not limited. For example, the first solenoid valve may be a two-position five-way solenoid valve or the like.

The second positive pressure gas source 443 is a component capable of providing positive pressure gas. The type, humidity, and the like of the positive pressure gas provided by the second positive pressure gas source 443 are all not limited, as long as it can be used to provide the positive pressure gas to the first pneumatic control valve 431.

It can be understood that the third gas passage 442 is in communication with the first pneumatic control valve 431 and not in communication with the first gas passage 41, such that the flammable and explosive gases such as hydrogen basically do not enter the third gas passage 442. In this way, the third gas passage 442 may be controlled to be opened or closed by the first solenoid valve 441.

In a state where the first solenoid valve 441 opens the third gas passage 442, the second positive pressure gas source 443 may deliver gas to the first pneumatic control valve 431. In a state where the first solenoid valve 441 closes the third gas passage 442, the second positive pressure gas source 443 stops delivering gas to the first pneumatic control valve 431.

A gas delivery path from the second positive pressure gas source 443 to the first pneumatic control valve 431 is connected or disconnected by the first solenoid valve 441, which facilitates control of the first pneumatic control valve 431 and also facilitates improvement of the automation level of the formation negative pressure system 100.

It can be understood that in some other embodiments, the first control assembly 44 may not include the first solenoid valve 441, that is, the second positive pressure gas source 443 is switched on or off to selectively deliver gas to the first pneumatic control valve 431 or stop delivering gas to the first pneumatic control valve 431.

Referring to FIG. 1 and FIG. 2, in an embodiment, the valve unit 43 includes a second pneumatic control valve 432 disposed on the second gas passage 42. The pipeline assembly 40 further includes a second control assembly 45. The second control assembly 45 is configured to control the second pneumatic control valve 432 to switch to an open state or a closed state.

The second pneumatic control valve 432 and the second control assembly 45 may be respectively configured with reference to the first pneumatic control valve 431 and the first control assembly 44, which will not be repeated herein.

The second gas passage 42 is a flow passage in communication with the negative pressure source 20, where flammable and explosive gases such as hydrogen may also remain.

The second gas passage 42 is controlled to be opened or closed by the second pneumatic control valve 432, and the second pneumatic control valve 432 is non-energized, thereby avoiding the risk of ignition or even explosion of flammable gas such as hydrogen remaining in the second gas passage.

The specific structure of the second control assembly 45 is not limited. By way of example, referring to FIG. 1 and FIG. 2, in an embodiment, the second control assembly 45 includes a second solenoid valve 451, a fourth gas passage 452, and a third positive pressure gas source 453. The third positive pressure gas source 453 is in communication with the second pneumatic control valve 432 via the fourth gas passage 452. The second solenoid valve 451 is disposed on the fourth gas passage 452.

The third positive pressure gas source 453 may be configured with reference to the second positive pressure gas source 443, which will not be repeated herein.

The second solenoid valve 451 may be configured with reference to the first solenoid valve 441, which will not be repeated herein.

The type of the second solenoid valve 451 is not limited. For example, the second solenoid valve may be a two-position five-way solenoid valve.

The fourth gas passage 452 may be configured with reference to the third gas passage 442, which will not be repeated herein.

A gas delivery path from the third positive pressure gas source 453 to the second pneumatic control valve 432 is connected or disconnected by the second solenoid valve 451, which facilitates control of the second pneumatic control valve 432 and also facilitates improvement of the automation level of the formation negative pressure system 100.

It can be understood that in some other embodiments, the second control assembly 45 may not include the second solenoid valve 451, that is, the third positive pressure gas source 453 is switched on or off to selectively deliver gas to the second pneumatic control valve 432 or stop delivering gas to the second pneumatic control valve 432.

It should be noted that the first positive pressure gas source 10, the second positive pressure gas source 443, and the third positive pressure gas source 453 may be the same positive pressure gas source. Any two of them may share the same positive pressure gas source. Certainly, all three may each independently use a respective positive pressure gas source. Referring to FIG. 1 to FIG. 3, in an embodiment, the pipeline assembly 40 further includes a gas-liquid separator 46. The gas-liquid separator 46 is disposed on the second gas passage 42.

The gas-liquid separator 46 may be understood as a component capable of separating gas and liquid from each other. The gas-liquid separator 46 may include, but is not limited to, a cyclone separator, a filter separator, a spiral-channel separator, and the like.

During formation of the battery cell 200, since the negative pressure source 20 is used to vacuumize the interior of the battery cell 200, the electrolyte may be extracted with the exhaust gas to form a gas-liquid mixture, and the electrolyte may corrode the components in the formation negative pressure system 100. To this end, the gas-liquid separator 46 can be disposed to separate the exhaust gas and the electrolyte in the gas-liquid mixture discharged from the battery cell 200, thereby preventing the electrolyte from entering other components of the formation negative pressure system 100.

It should be noted that other components include, but are not limited to, a pressure control component, a flow control component, and the like.

By disposing the gas-liquid separator 46 to separate exhaust gas from waste electrolyte, on the one hand, the risk of the electrolyte entering other components of the formation negative pressure system 100 is reduced, thereby helping to improve the overall service life of the formation negative pressure system 100; and on the other hand, the risk of the waste electrolyte flowing back into the battery cell 200 can be reduced, thereby helping to improve the reliability of the battery cell 200.

Referring to FIG. 1 to FIG. 3, in an embodiment, the pipeline assembly 40 further includes a liquid storage member 47 and a drain valve 48. The liquid storage member 47 is in communication with the gas-liquid separator 46 and is configured to collect the liquid separated by the gas-liquid separator 46. The drain valve 48 is disposed on the liquid storage member 47 and configured to be capable of connecting or switching a liquid discharge path from the liquid storage member 47 to the outside.

The liquid storage member 47 is a component having a certain liquid storage capacity. For example, the liquid storage member may be a liquid storage cup or the like.

The type of the drain valve 48 is not limited. For example, the drain valve may be a solenoid valve, a manual ball valve, or the like.

The electrolyte separated by the gas-liquid separator 46 may be stored in the liquid storage member 47. After the liquid storage member 47 stores a large amount of electrolyte, the electrolyte in the liquid storage member 47 can be discharged to the outside by opening the drain valve 48.

The arrangement of the liquid storage member 47 and the drain valve 48 facilitates collection of the electrolyte separated by the gas-liquid separator 46, thereby facilitating unified discharge and treatment of the electrolyte without real-time treatment thereof, which helps to simplify the treatment process.

It should be noted that the manner of controlling opening of the drain valve 48 is not limited. For example, in some embodiments, the drain valve 48 may be opened periodically to perform a centralized discharge and treatment of the electrolyte collected in the liquid storage member 47.

In some other embodiments, referring to FIG. 1 to FIG. 3, the formation negative pressure system 100 further includes a liquid level sensor 49, where the liquid level sensor 49 is disposed on the liquid storage member 47.

The liquid level sensor 49 can detect a liquid level in the liquid storage member 47. When the liquid level in the liquid storage member 47 reaches a certain height, information of a high liquid level in the liquid storage member 47 can be transmitted to the formation negative pressure system 100. The formation negative pressure system 100 can automatically control opening of the drain valve 48 for liquid discharge, thereby helping to improve the automation of the formation negative pressure system 100.

Referring to FIG. 1, FIG. 2, FIG. 4, and FIG. 5, the negative pressure module 30 further includes a housing 32 having a hollow cavity 32a. There are a plurality of gas nozzles 31. Each gas nozzle 31 is disposed on the housing 32 and is in communication with the hollow cavity 32a. The hollow cavity 32a is selectively in communication with the first positive pressure gas source 10 or the negative pressure source 20.

The specific structure of the housing 32 is not limited, as long as it can form the hollow cavity 32a. For example, the housing 32 may include an upper housing and a lower housing, where the upper housing has a cavity, the lower housing is disposed on an open side of the cavity to form the hollow cavity 32a, and an O-ring may be disposed between the upper housing and the lower housing to improve the sealing performance therebetween.

By forming the hollow cavity 32a, on the one hand, one negative pressure module 30 can be provided with a plurality of gas nozzles 31, such that the negative pressure module 30 can simultaneously perform formation treatment on a plurality of battery cells 200; and on the other hand, when the battery cell 200 is subjected to the formation treatment, the extracted electrolyte can enter the hollow cavity 32a under the action of the negative pressure source 20, and each gas nozzle 31 does not need to be provided with a negative pressure cup separately, thereby reducing the number of components to be cleaned and helping to lower manual cleaning costs.

It should be noted that there may be a plurality of negative pressure modules 30. The mounting manner of the plurality of negative pressure modules 30 in the formation negative pressure system 100 is not limited.

By way of example, referring to FIG. 1 and FIG. 2, the first gas passage 41 and the second gas passage 42 of the formation negative pressure system 100 have an overlapping portion, and all the negative pressure modules 30 are connected to the overlapping portion of the first gas passage 41 and the second gas passage 42.

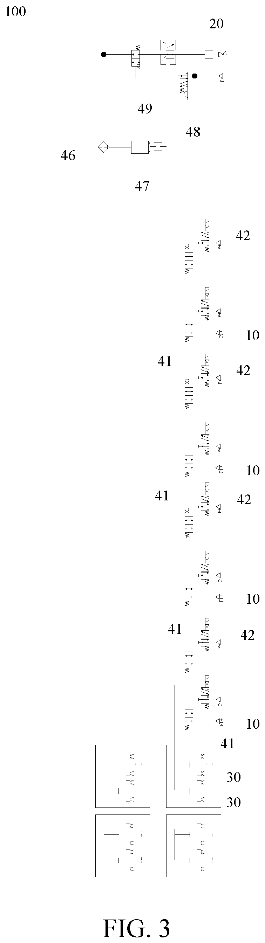

By way of example, referring to FIG. 3, the formation negative pressure system 100 further includes a plurality of first gas passages 41 and second gas passages 42 in one-to-one correspondence with the first gas passages 41, where overlapping portions exist between the first gas passages 41 and the second gas passages 42 in one-to-one correspondence, and a plurality of negative pressure modules 30 are connected to the overlapping portion of each pair of the first gas passage 41 and the second gas passage 42.

Certainly, an overlapping portion may also exist between the plurality of first gas passages 41, and each first gas passage 41 is in communication with the negative pressure source 20 via the overlapping portion, such that only one negative pressure source 20 may be used, and only one set of gas-liquid separator 46, liquid storage member 47, drain valve 48 and liquid level sensor 49 may also be used, thereby reducing the cost of the formation negative pressure system 100.

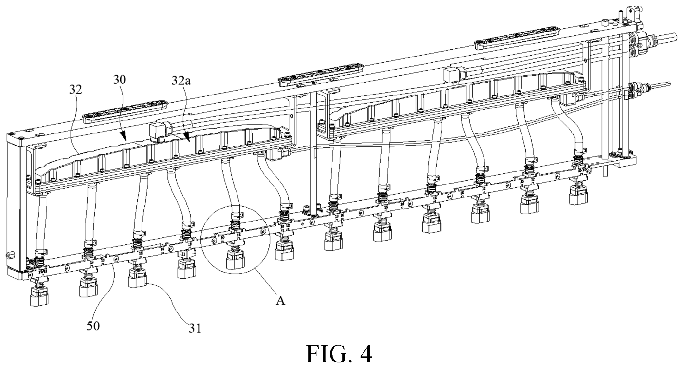

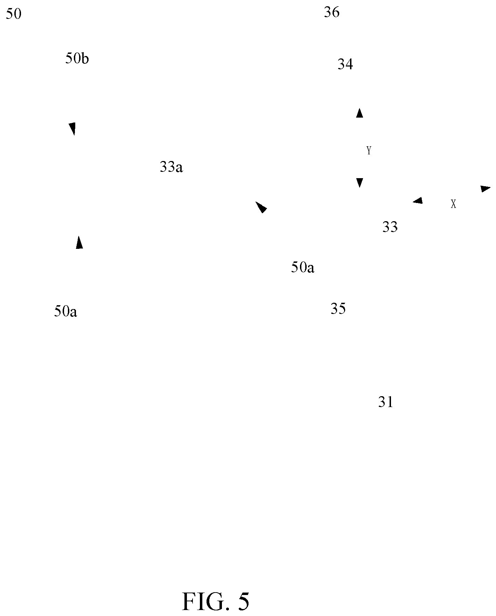

Referring to FIG. 4 and FIG. 5, in an embodiment, the formation negative pressure system 100 further includes a frame body 50. The negative pressure module 30 is disposed on the frame body 50. Furthermore, the mounting position of the gas nozzle 31 on the frame body 50 is adjustable.

The structure of the frame body 50 is not limited. It is only required that the negative pressure module 30 can be mounted.

The expression that the mounting position of the gas nozzle 31 on the frame body 50 is adjustable means that the mounting position of the gas nozzle 31 on the frame body 50 is not fixed.

By configuring the mounting position of the gas nozzle 31 on the frame body 50 to be adjustable, the gas nozzle 31 can be moved to a plurality of mounting positions, such that the gas nozzle 31 can be conveniently in sealing fit with liquid injection holes of battery cells 200 of various types and sizes, thereby helping to improve the versatility of the formation negative pressure system 100.

Referring to FIG. 4 and FIG. 5, in an embodiment, the frame body 50 is provided with a plurality of mounting positions 50a arranged in a first direction. The gas nozzle 31 can be mounted onto any mounting position 50a.

The specific direction of the first direction is not limited. By way of example, the first direction may be the direction indicated by X in FIG. 5.

The mounting position 50a may be understood as a fixed position of the gas nozzle 31 on the frame body 50.

The gas nozzle 31 may be disposed at any position of the frame body 50 in the first direction. For example, an elongated hole extending in the first direction is formed in the frame body 50. A fastener may pass through any position of the elongated hole to fasten the gas nozzle 31 to the frame body 50. In this embodiment, the mounting position 50a may be understood as a position where the fastener is fastened to the elongated hole. With this type of mounting position 50a, the gas nozzle 31 may be mounted at any position on the frame body 50 within the movement range of the gas nozzle 31 in the first direction, thereby achieving stepless adjustment of the mounting of the gas nozzle 31 on the frame body 50.

Certainly, the mounting positions 50a may also be specific structures arranged at intervals in the first direction, such that the gas nozzle 31 may be mounted at any mounting position 50a.

By providing the plurality of mounting positions 50a arranged in the first direction, the mounting of the gas nozzle 31 on the frame body 50 is facilitated, and the mounting position of the gas nozzle 31 on the frame body 50 is made adjustable.

Referring to FIG. 4 and FIG. 5, in an embodiment, the negative pressure module 30 further includes a first limiting member 33 and a second limiting member 34 spaced apart on the gas nozzle 31 in a second direction. At least part of the frame body 50 is clamped between the first limiting member 33 and the second limiting member 34. The first limiting member 33 is provided with an engaging portion 33a. Furthermore, the first limiting member 33 is movable in the second direction, such that the engaging portion 33a can be engaged with or disengaged from the mounting position 50a. The second direction intersects the first direction.

The specific direction of the second direction is not limited. For example, the second direction may be the direction indicated by Y in FIG. 5.

The specific angle between the second direction and the first direction is not limited. For example, the second direction may be orthogonal to the first direction.

The shapes of both the first limiting member 33 and the second limiting member 34 are not limited. For example, they may be block-shaped.

The expression that the first limiting member 33 is movable in the second direction such that the engaging portion 33a can be engaged with or disengaged from the mounting position 50a means that, at the same mounting position 50a, the engaging portion 33a can be engaged with the mounting position 50a by moving the first limiting member 33 toward one side in the second direction, and the engaging portion 33a can be disengaged from the mounting position 50a by moving the first limiting member 33 toward the other side in the second direction.

It can be understood that at least part of the frame body 50 is clamped between the first limiting member 33 and the second limiting member 34, such that when the first limiting member 33 moves toward one side in the second direction, both the first limiting member 33 and the second limiting member 34 can abut against the frame body 50, thereby achieving stable mounting of the gas nozzle 31 on the frame body 50 in the second direction; and when the first limiting member 33 moves toward the other side in the second direction, at least one of the first limiting member 33 and the second limiting member 34 can be separated from the frame body 50, and based on the above, the engaging portion 33a is also disengaged from the current mounting position 50a, such that the gas nozzle 31 can move to another mounting position 50a in the first direction.

That is, only by controlling the first limiting member 33 to move in the second direction, the gas nozzle 31 can be conveniently moved in the first direction and moved to another mounting position 50a while the gas nozzle 31 can be engaged with or disengaged from one mounting position 50a, thereby improving the convenience of mounting the gas nozzle 31 and adjusting the mounting position 50.

Referring to FIG. 4 and FIG. 5, in an embodiment, one of the mounting position 50a and the engaging portion 33a is a groove, and the other thereof is a protrusion. The protrusion extends in the second direction.

Specifically, the mounting position 50a may be a groove, and the engaging portion 33a may be a protrusion.

When the first limiting member 33 moves in the second direction, the protrusion can extend into the groove or be disengaged from the groove. In a state in which the protrusion extends into the groove, the first limiting member 33 is in limiting fit with the frame body 50 in the first direction.

The size of the protrusion may be adapted to that of the groove, that is, the size of the groove is slightly greater than that of the protrusion, such that the difficulty for the protrusion to extend into the groove can be reduced.

The engagement between the protrusion and the groove is relatively simple, which facilitates engagement or disengagement of the engaging portion 33a with or from the mounting position 50a.

Referring to FIG. 4 and FIG. 5, in an embodiment, the frame body 50 is provided with a sliding slot 50b extending in the first direction. The gas nozzle 31 is movably disposed through the sliding slot 50b in the first direction.

It can be understood that the first limiting member 33 and the second limiting member 34 are located on two opposite sides of the sliding slot 50b in the second direction.

Further, when the frame body 50 is further provided with a groove, the groove is located on one side of the sliding slot 50b close to the first limiting member 33 in the second direction.

When the gas nozzle 31 moves in the first direction to switch among the plurality of mounting positions 50a, the sliding slot 50b can provide guidance for the movement of the gas nozzle 31, which facilitates the movement of the gas nozzle 31 to the mounting position 50a where it is to be mounted.

Referring to FIG. 4 and FIG. 5, in an embodiment, the negative pressure module 30 further includes a first elastic return member 35. Under an external force, the first limiting member 33 is movable in the second direction to disengage the engaging portion 33a from the mounting position 50a, and the first elastic return member 35 undergoes elastic deformation. The first elastic return member 35 recovers from the elastic deformation to engage the engaging portion 33a with the mounting position 50a.

The type of the first elastic return member 35 is not limited. For example, the first elastic return member may be a tension spring, a compression spring, or the like. Specifically, the first elastic return member 35 may be a compression spring extending in the second direction. The first elastic return member 35 is disposed on one side of the first limiting member 33 facing away from the second limiting member 34 in the second direction. When the first limiting member 33 moves to one side away from the second limiting member 34 in the second direction, the compression spring is compressed.

Specifically, when the engaging portion 33a is a protrusion and the mounting position 50a is a groove, the first elastic return member 35 can enable the protrusion to be stably disposed in the groove. Under an external force, the first limiting member 33 moves in the second direction. After the protrusion is disengaged from the groove, the gas nozzle 31 is controlled to move in the first direction, such that the protrusion can match another groove. In this case, the external force is removed, and the first elastic return member 35 recovers from the elastic deformation, thereby pushing the protrusion to engage with the groove.

By means of the first elastic return member 35, on the one hand, the reliability of engagement between the engaging portion 33a and the mounting position 50a can be enhanced; and on the other hand, after the first elastic return member 35 undergoes elastic deformation, a certain elastic force can be provided. Under the elastic force, the engaging portion 33a can be conveniently engaged with the mounting position 50a, thereby facilitating operation by an operator.

Referring to FIG. 4 and FIG. 5, in an embodiment, the negative pressure module 30 further includes a second elastic return member 36. Under an external force, the second limiting member 34 is movable in the second direction and can be separated from the frame body 50, and the second elastic return member 36 undergoes elastic deformation. The second elastic return member 36 recovers from the elastic deformation, such that the second limiting member 34 abuts against the frame body 50.

The type of the second elastic return member 36 is not limited. For example, the second elastic return member may be a compression spring, a tension spring, or the like. Specifically, the second elastic return member 36 may be a compression spring extending in the second direction. The second elastic return member 36 is disposed on one side of the second limiting member 34 facing away from the first limiting member 33 in the second direction. When the second limiting member 34 moves to one side away from the first limiting member 33 in the second direction, the compression spring is compressed.

The second limiting member 34 abuts against the frame body 50 via the second elastic return member 36. On the one hand, the second elastic return member 36 can undergo elastic deformation, thereby facilitating release of the limitation between the second limiting member 34 and the frame body 50 in the second direction, and further enabling the gas nozzle 31 to be moved to any mounting position 50a. On the other hand, in a return state, the second elastic return member 36 can press the second limiting member 34 against the frame body 50, thereby improving the mounting stability of the gas nozzle 31 on the frame body 50.

In a specific embodiment, referring to FIG. 1 to FIG. 5, the formation negative pressure system 100 includes a negative pressure module 30, a pipeline assembly 40, a first positive pressure gas source 10, a frame body 50, and a negative pressure source 20. The negative pressure module 30 includes a housing 32, a gas nozzle 31, a first limiting member 33, a second limiting member 34, a first elastic return member 35, and a second elastic return member 36. The housing 32 is disposed on the frame body 50. The housing 32 has a hollow cavity 32a. There are a plurality of gas nozzles 31, each of which is in communication with the hollow cavity 32a. The frame body 50 is provided with a plurality of mounting positions 50a extending in the first direction. The frame body 50 is provided with a sliding slot 50b extending in the first direction. The gas nozzle 31 is disposed through the sliding slot 50b in the second direction. The mounting position 50a is a groove. The first limiting member 33 and the second limiting member 34 are spaced apart on the gas nozzle 31 in the second direction. The first limiting member 33 is connected to the first elastic return member 35. The second limiting member 34 is connected to the second elastic return member 36. When the first elastic return member 35 and the second elastic return member 36 are in the return state, at least part of the frame body 50 is clamped between the first limiting member 33 and the second limiting member 34. When the first limiting member 33 moves to one side away from the second limiting member 34 in the second direction, the first elastic return member 35 undergoes elastic deformation. When the second limiting member 34 moves to one side away from the first limiting member 33 in the second direction, the second elastic return member 36 undergoes elastic deformation. The first limiting member 33 is provided with an engaging portion 33a. The engaging portion 33a is a protrusion. The protrusion extends in the second direction.

The pipeline assembly 40 includes a first gas passage 41, a second gas passage 42, a first pneumatic control valve 431, a second pneumatic control valve 432, a first solenoid valve 441, a third gas passage 442, a second positive pressure gas source 443, a second solenoid valve 451, a fourth gas passage 452, a third positive pressure gas source 453, a gas-liquid separator 46, a liquid storage member 47, a drain valve 48, and a liquid level sensor 49. The first positive pressure gas source 10 is in communication with the hollow cavity 32a of the housing 32 via the first gas passage 41. The negative pressure source 20 is in communication with the hollow cavity 32a via the second gas passage 42. The first pneumatic control valve 431 is disposed on the first gas passage 41. The second positive pressure gas source 443 is in communication with the first pneumatic control valve 431 via the third gas passage 442. The first solenoid valve 441 is disposed on the third gas passage 442. The second pneumatic control valve 432 is disposed on the second gas passage 42. The third positive pressure gas source 453 is in communication with the second pneumatic control valve 432 via the fourth gas passage 452. The second solenoid valve 451 is disposed on the fourth gas passage 452. The gas-liquid separator 46 is disposed on the second gas passage 42 and located between the second pneumatic control valve 432 and the negative pressure source 20. The liquid storage member 47 is in communication with the gas-liquid separator 46. The drain valve 48 and the liquid level sensor 49 are respectively disposed on the liquid storage member 47.

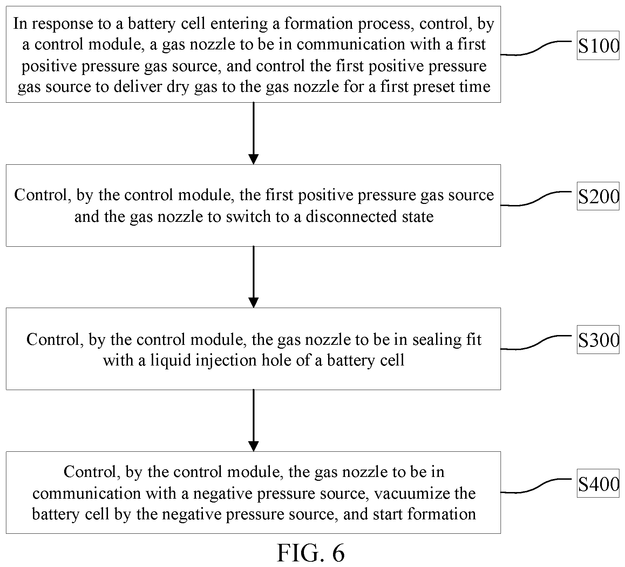

Referring to FIG. 6, in a second aspect, the embodiments of the present disclosure provide a control method for a formation negative pressure system.

It should be noted that the control method is applicable to the formation negative pressure system 100 according to any embodiment of the present disclosure.

The formation negative pressure system 100 includes a control module, a first positive pressure gas source 10, a negative pressure source 20, and a negative pressure module 30, where the negative pressure module 30 includes a gas nozzle 31.

Certainly, the formation negative pressure system 100 may further include other components. For example, the components of the formation negative pressure system 100 of any embodiment of the present disclosure are included, but not limited thereto.

Since the components of the formation negative pressure system 100 have been described in detail in the foregoing, they will not be repeated herein.

The control module may be understood as a component of the formation negative pressure system 100 for controlling the actions of various components. The type of the control module is not limited. For example, the control module may be a control main board or the like.

Referring to FIG. 6, the control method includes:
S100: in response to a battery cell entering a formation process, controlling, by the control module, the gas nozzle to be in communication with the first positive pressure gas source, and controlling the first positive pressure gas source to deliver dry gas to the gas nozzle for a first preset time;
S200: controlling, by the control module, the first positive pressure gas source and the gas nozzle to switch to a disconnected state;
S300: controlling, by the control module, the gas nozzle to be in sealing fit with a liquid injection hole of the battery cell; and
S400: controlling, by the control module, the gas nozzle to be in communication with the negative pressure source, vacuumizing the battery cell by the negative pressure source, and starting formation.

Reference is made to FIG. 2. FIG. 2 shows a formation negative pressure system 100 according to a specific embodiment of the present disclosure.

Specifically, the control module controls the gas nozzle 31 to be in communication with the first positive pressure gas source 10. The control module sends a command to energize the first solenoid valve 441, thereby opening the third gas passage 442. The second positive pressure gas source 443 delivers gas to the first pneumatic control valve 431. The first pneumatic control valve 431 is opened under the action of the second positive pressure gas source 443, such that the first gas passage 41 is in an open state. In this way, the gas nozzle 31 may be in communication with the first positive pressure gas source 10 via the first gas passage 41. In this case, the control module controls the first positive pressure gas source 10 to output dry gas. The dry gas may be blown to the battery cell 200 via the gas nozzle 31.

The first gas passage 41 is opened or closed by the first pneumatic control valve 431, and the first pneumatic control valve 431 is non-energized, such that even if flammable and explosive gases such as hydrogen exist in the first gas passage 41, there will be no problem such as ignition, thereby helping to reduce the stability of the flammable and explosive gases such as hydrogen in the first gas passage 41.

After the dry gas is delivered for the first preset time, a small-range dry gas protection layer is formed around the liquid injection hole of the battery cell 200. In this state, the control module sends a command to de-energize the first solenoid valve 441, thereby disconnecting a gas supply path from the second positive pressure gas source 443 to the first pneumatic control valve 431. The first pneumatic control valve 431 is switched to a closed state, and the first gas passage 41 is closed, such that the first positive pressure gas source 10 and the gas nozzle 31 are switched to a disconnected state.

After the dry gas protection layer is formed, the switch valve of the battery cell 200 is opened, and the gas nozzle 31 is quickly in sealing fit with the liquid injection hole.

After the gas nozzle 31 is in sealing fit with the liquid injection hole, the control module controls the gas nozzle 31 to switch to be in communication with the negative pressure source 20, such that the interior of the battery cell 200 can be vacuumized to start formation.

In a specific embodiment, referring to FIG. 2, the specific process in which the control module controls the gas nozzle 31 to be in communication with the negative pressure source 20 may be that the control module outputs a command to control the second solenoid valve 451 to be in an energized state, thereby opening the fourth gas passage 452. When the third positive pressure gas source 453 delivers gas to the second pneumatic control valve 432 via the fourth gas passage 452, the second pneumatic control valve 432 is switched to an open state, such that the second gas passage 42 is in an open state. The negative pressure source 20 is in communication with the gas nozzle 31 via the second gas passage 42, thereby vacuuming the interior of the battery cell 200.

A dry gas protection layer can be conveniently formed around the liquid injection hole of the battery cell 200 by delivering the dry gas to the battery cell 200. In a state where the dry gas protection layer is formed, the switch valve of the battery cell 200 is opened, and the gas nozzle 31 is quickly in sealing fit with the liquid injection hole. By means of the dry gas protection layer, even if the formation workshop is in a high-humidity environment, water vapor cannot flow into the battery cell 200, that is, it is not needed to dehumidify the entire formation workshop by means of the dehumidification system, thereby being conducive to reducing the production energy consumption of the battery cell 200.

In an embodiment, the first preset time is in a range of 10 s to 30 s. For example, the first preset time may be 10 s, 12 s, 14 s, 16 s, 18 s, 20 s, 22 s, 24 s, 26 s, 28 s, 30 s, or the like.

It should be noted that in the embodiments of the present disclosure, the unit denoted by "s" is "second".

By controlling the first preset time within a range of 10 s to 30 s, on the one hand, the first preset time is at least 10 s, that is, the first positive pressure gas source 10 can deliver the dry gas for at least 10 s, thereby facilitating formation of the small-range dry gas protection layer at the liquid injection hole of the battery cell 200; and on the other hand, the first preset time is at most 30 s, such that on the premise of ensuring the formation of the dry gas protection layer, excessive time is not occupied, thereby reasonably controlling the time required by the entire formation process of the battery cell 200 and helping to improve the production efficiency of the battery cell 200.

In an embodiment, the control method further includes:
determining that the formation process of the battery cell is completed, then controlling, by the control module, the gas nozzle to remain in communication with the negative pressure source, and controlling the gas nozzle to be separated from the liquid injection hole of the battery cell.

By maintaining the gas nozzle 31 in communication with the negative pressure source 20, the gas such as hydrogen generated by the battery cell 200 in the entire formation process can be extracted by the negative pressure source 20 as much as possible, thereby reducing the possibility that this part of gas remains in the battery cell 200 as much as possible, and further reducing the risk of adversely affecting the performance of the battery cell 200.

In an embodiment, after the step of determining that the formation process of the battery cell is completed, then controlling, by the control module, the gas nozzle to remain in communication with the negative pressure source, and controlling the gas nozzle to be separated from the liquid injection hole of the battery cell, the control method further includes:
controlling, by the control module, the gas nozzle to be in communication with the first positive pressure gas source, and controlling the first positive pressure gas source to deliver the dry gas to the gas nozzle for a second preset time.

It can be understood that, during formation of the battery cell 200, the negative pressure source 20 may draw part of the electrolyte through the liquid injection hole, and this part of the electrolyte may remain in the gas nozzle 31.

After the gas nozzle 31 is separated from the liquid injection hole of the battery cell 200, the dry gas is blown out to the gas nozzle 31 via the first positive pressure gas source 10, which facilitates blowing out the residual electrolyte in the gas nozzle 31 and helps to reduce contamination of the gas nozzle 31.

In an embodiment, the second preset time is in a range of 5 s to 10 s. For example, the second preset time may be 5 s, 5.5 s, 6 s, 6.5 s, 7 s, 7.5 s, 8 s, 8.5 s, 9 s, 9.5 s, 10 s, or the like.

By controlling the second preset time within a range of 5 s to 0 s, on the one hand, the second preset time is at least 5 s, meaning that after the formation process of the previous batch of battery cells 200 is completed, the first positive pressure gas source 10 delivers the dry gas to the gas nozzle 31 for at least 5 s, thereby helping to blow out the electrolyte in the gas nozzle 31; and on the other hand, the second preset time is at most 10 s, such that on the premise of ensuring that the gas nozzle 31 can blow out the electrolyte, excessive blowing time is not occupied, thereby allowing the formation process of the next batch of battery cells 200 to proceed quickly and helping to improve the production efficiency of the battery cell 200.

In a specific embodiment, the present disclosure provides a control method for a formation negative pressure system, the control method including:
in response to a battery cell entering a formation process, controlling, by the control module, the gas nozzle to be in communication with the first positive pressure gas source, and controlling the first positive pressure gas source to deliver dry gas to the gas nozzle for 10 s to 30 s;
controlling, by the control module, the first positive pressure gas source and the gas nozzle to switch to a disconnected state;
controlling, by the control module, the gas nozzle to be in sealing fit with a liquid injection hole of the battery cell;
controlling, by the control module, the gas nozzle to be in communication with the negative pressure source, vacuumizing the battery cell by the negative pressure source, and starting formation;
determining that the formation process of the battery cell is completed, then controlling, by the control module, the gas nozzle to remain in communication with the negative pressure source, and controlling the gas nozzle to be separated from the liquid injection hole of the battery cell; and
controlling, by the control module, the gas nozzle to be in communication with the first positive pressure gas source, and controlling the first positive pressure gas source to deliver dry gas to the gas nozzle for 5 s to 10 s.

The above embodiments are only used to illustrate the technical solutions of the present disclosure, but not to limit them. Although the present disclosure has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present disclosure. All such modifications and replacements should fall within the scope of the claims and specification of the present disclosure. In particular, the technical features mentioned in the embodiments may be combined in any manner provided that no structural conflict is present. The present disclosure is not limited to the specific embodiments disclosed herein, but includes all technical solutions falling within the scope of the claims.

## Claims

1. A formation negative pressure system, comprising:
a first positive pressure gas source, configured to provide dry gas;
a negative pressure source; and
a negative pressure module, comprising a gas nozzle, wherein one end of the gas nozzle is selectively in communication with the first positive pressure gas source or the negative pressure source, the other end of the gas nozzle is configured to be matched with a liquid injection hole of a battery cell, and the negative pressure source is configured to be capable of vacuumizing the battery cell via the gas nozzle.

2. The formation negative pressure system according to claim 1, further comprising a pipeline assembly, wherein the pipeline assembly comprises a first gas passage, a second gas passage, and a valve unit, the first positive pressure gas source is in communication with the gas nozzle via the first gas passage, the negative pressure source is in communication with the gas nozzle via the second gas passage, and the valve unit is disposed on the first gas passage and the second gas passage and is capable of respectively opening or closing the first gas passage and the second gas passage.

3. The formation negative pressure system according to claim 2, wherein the valve unit comprises a first pneumatic control valve disposed on the first gas passage, the pipeline assembly further comprises a first control assembly, and the first control assembly is configured to control the first pneumatic control valve to switch to an open state or a closed state.

4. The formation negative pressure system according to claim 3, wherein the first control assembly comprises a first solenoid valve, a third gas passage, and a second positive pressure gas source, the second positive pressure gas source is in communication with the first pneumatic control valve via the third gas passage, and the first solenoid valve is disposed on the third gas passage.

5. The formation negative pressure system according to any one of claims 2 to 4, wherein the valve unit comprises a second pneumatic control valve disposed on the second gas passage, the pipeline assembly further comprises a second control assembly, and the second control assembly is configured to control the second pneumatic control valve to switch to an open state or a closed state.

6. The formation negative pressure system according to claim 5, wherein the second control assembly comprises a second solenoid valve, a fourth gas passage, and a third positive pressure gas source, the third positive pressure gas source is in communication with the second pneumatic control valve via the fourth gas passage, and the second solenoid valve is disposed on the fourth gas passage.

7. The formation negative pressure system according to any one of claims 2 to 6, wherein the pipeline assembly further comprises a gas-liquid separator, and the gas-liquid separator is disposed on the second gas passage.

8. The formation negative pressure system according to claim 7, wherein the pipeline assembly further comprises a liquid storage member and a drain valve, the liquid storage member is in communication with the gas-liquid separator and is configured to collect liquid separated by the gas-liquid separator, and the drain valve is disposed on the liquid storage member and configured to be capable of connecting or switching a liquid discharge path from the liquid storage member to the outside.

9. The formation negative pressure system according to any one of claims 1 to 8, wherein the negative pressure module further comprises a housing having a hollow cavity, there are a plurality of gas nozzles, each of the gas nozzles is disposed on the housing and is in communication with the hollow cavity, and the hollow cavity is selectively in communication with the first positive pressure gas source or the negative pressure source.

10. The formation negative pressure system according to any one of claims 1 to 9, further comprising a frame body, wherein the negative pressure module is disposed on the frame body, and a mounting position of the gas nozzle on the frame body is adjustable.

11. The formation negative pressure system according to claim 10, wherein the frame body is provided with a plurality of mounting positions arranged in a first direction, and the gas nozzle is capable of being mounted on any one of the mounting positions.

12. The formation negative pressure system according to claim 11, wherein the negative pressure module further comprises a first limiting member and a second limiting member spaced apart on the gas nozzle in a second direction, at least part of the frame body is clamped between the first limiting member and the second limiting member, the first limiting member is provided with an engaging portion, and the first limiting member is movable in the second direction, such that the engaging portion is capable of being engaged with or disengaged from the mounting position, wherein the second direction intersects with the first direction.

13. The formation negative pressure system according to claim 12, wherein one of the mounting position and the engaging portion is a groove, the other of the mounting position and the engaging portion is a protrusion, and the protrusion extends in the second direction.

14. The formation negative pressure system according to claim 12 or 13, wherein the frame body is provided with a sliding slot extending in the first direction, and the gas nozzle is movably disposed through the sliding slot in the first direction.

15. The formation negative pressure system according to any one of claims 12 to 14, wherein the negative pressure module further comprises a first elastic return member; under an external force, the first limiting member is movable in the second direction to disengage the engaging portion from the mounting position, and the first elastic return member undergoes elastic deformation; and the first elastic return member recovers from the elastic deformation to engage the engaging portion with the mounting position; and/or
the negative pressure module further comprises a second elastic return member; under the external force, the second limiting member is movable in the second direction and is separated from the frame body, and the second elastic return member undergoes elastic deformation; and the second elastic return member recovers from the elastic deformation, such that the second limiting member abuts against the frame body.

16. A control method for a formation negative pressure system, the formation negative pressure system comprising a control module, a first positive pressure gas source, a negative pressure source, and a negative pressure module, the negative pressure module comprising a gas nozzle, and the control method comprising:
in response to a battery cell entering a formation process, controlling, by the control module, the gas nozzle to be in communication with the first positive pressure gas source, and controlling the first positive pressure gas source to deliver dry gas to the gas nozzle for a first preset time;
controlling, by the control module, the first positive pressure gas source and the gas nozzle to switch to a disconnected state;
controlling, by the control module, the gas nozzle to be in sealing fit with a liquid injection hole of the battery cell; and
controlling, by the control module, the gas nozzle to be in communication with the negative pressure source, vacuumizing the battery cell by the negative pressure source, and starting formation.

17. The control method according to claim 16, wherein the first preset time is in a range of 10 s to 30 s.

18. The control method according to claim 16 or 17, further comprising:
determining that the formation process of the battery cell is completed, then controlling, by the control module, the gas nozzle to remain in communication with the negative pressure source, and controlling the gas nozzle to be separated from the liquid injection hole of the battery cell.

19. The control method according to claim 18, wherein after the step of determining that the formation process of the battery cell is completed, then controlling, by the control module, the gas nozzle to remain in communication with the negative pressure source, and controlling the gas nozzle to be separated from the liquid injection hole of the battery cell, the control method further comprises:
controlling, by the control module, the gas nozzle to be in communication with the first positive pressure gas source, and controlling the first positive pressure gas source to deliver the dry gas to the gas nozzle for a second preset time.

20. The control method according to claim 19, wherein the second preset time is in a range of 5 s to 10 s.
